# EUROPEAN PATENT APPLICATION

(11) **EP 4 814 295 A1**
(43) Date of publication of application: **30.09.2026**
(21) Application number: 25382305.8
(22) Date of filing: 28.03.2025
(51) Int. Cl.: F03D 1/06, F03D 80/70

(54) **METHOD FOR MOUNTING A TENSIONING SYSTEM, GUIDE, TENSIONING SYSTEM AND WIND TURBINE**

(71) Applicant: Nordex Energy Spain, S.A.U., 31395 Barasoain (Navarra) (ES)
(72) Inventor: Pascual Resano, Javier, 31395 Barasoain (ES); Echarri Latasa, Román, 31395 Barasoain (ES); Azanza Ladrón, Carlos, 31395 Barasoain (ES); Aristegui Lantero, Jose Luis, 31395 Barasoain (ES)
(74) Representative: Epping - Hermann - Fischer

(57) **Abstract**

A method comprises:
- attaching a first guide (351) to a bearing (200),
- introducing a first end region (371) of a first tensioner (331) into the first guide (351),
- wrapping the first tensioner (331) around the bearing (200),
- introducing the first end region (371) into a first retaining device (341),
- introducing a second end region (372) of the first tensioner (331) into the first retaining device (341),
- tensioning the first tensioner (331) by pulling on the first end (361) and/or second end (362),
- fixing each of the first end region (371) and the second end region (372) to the first retaining device (341) under tension. A guide, a tensioning system and a wind turbine are also disclosed

## Description

The disclosure relates to a method for mounting a tensioning system to a bearing for a wind turbine, in particular for mounting a tensioning system as disclosed herein. The disclosure relates to a guide for a tensioning system for a bearing of a wind turbine. The disclosure relates to a tensioning system, in particular with a guide as disclosed herein. The disclosure further relates to a wind turbine, in particular to a wind turbine with a tensioning system as disclosed herein.

A wind turbine may include a rotor that includes a rotatable rotor assembly having multiple rotor blades. The rotor blades transform wind energy into a drive torque that drives the generator of the wind turbine via a drive train.

In occasions, it is desirable to provide a reinforcement arrangement for a bearing of a wind turbine, a bearing for a wind turbine, a wind turbine and a method for mounting a reinforcement arrangement, each of which provides a reliable operation.

Embodiments of the disclosure provide a method for mounting a tensioning system to a bearing for a wind turbine. Embodiments of the disclosure provide a guide for a tensioning system for a bearing of a wind turbine. Embodiments of the disclosure provide a tensioning system. Embodiments of the disclosure provide a wind turbine.

According to an embodiment, the method comprises:
- providing a first elongated, flexible tensioner,
   wherein the first tensioner comprises a first end and a second end, a first end region adjoining the first end and a second end region adjoining the second end,
- providing a first retaining device, wherein the first retaining device is configured to keep the first tensioner under tension,
- providing a first guide, wherein the first guide is configured to hold the first tensioner,
- providing the bearing,
- attaching the first guide to the bearing,
- introducing the first end region into the first guide,
- wrapping the first tensioner around the bearing,
- introducing the first end region into the first retaining device,
- introducing the second end region into the first retaining device,
- tensioning the first tensioner by pulling on the first end and/or second end,
- fixing each of the first end region and the second end region to the first retaining device under tension.

The method enables safe and reliable installation of the tensioning system. The guide holds the tensioner securely in the desired position and prevents unintentional detachment of the tensioner. For example, the guide counteracts the inherent rigidity of the tensioner. The method is carried out in particular while the rotor is at the top of the tower.

The tensioning system when fully installed and tensioned, applies a compressive force to the first bearing ring. The tensioning system is configured to reinforce the bearing.

According to some embodiments, the bearing is a pitch bearing. The first retaining device may be located with its centre in a region between 70° and 110° of the bearing, wherein a rotor shaft is arrangeable at 0°. This enables good accessibility and therefore easy installation.

According to some embodiments, the first retaining device is located with its centre in a region between 250° and 290° of the bearing. This enables good accessibility and therefore easy installation.

According to some embodiments, the first tensioner is tensioned at the second end, wherein the second end is arranged such that it points towards a nacelle of the wind turbine. This enables good accessibility and therefore reliable tensioning. This enables to have the desired distribution of the tension of the strand along the strand, in particular the maximum tension of the strand in the desired area of the bearing. This enables that a higher compression force is exerted in the region where loads from the wind are higher.

According to some embodiments, the first tensioner is cut in the second end region to a desired length. This allows the tensioner to be adapted to the bearing to be reinforced.

According to some embodiments, the method comprises:
- providing a second guide, wherein the second guide is configured to hold the first tensioner,
- attaching the second guide to the bearing at a distance from the first guide,
- introducing the first end region into the second guide. For example, this is useful, in case the first retaining device is located with its centre in a region between 70° and 110°. Other regions between other degree values may also be useful.

According to some embodiments, the method comprises:
- providing a second guide, wherein the second guide is configured to hold the first tensioner,
- attaching the second guide to the bearing at a distance from the first guide,
- introducing the second end region into the second guide. For example, this is useful, in case the first retaining device is located with its centre in a region between 250° and 290°. Other regions between other degree values may also be useful.

According to some embodiments, the method comprises:
- providing a third guide, wherein the third guide is configured to hold the first tensioner,
- attaching the third guide to the bearing at a distance from the first guide and from the second guide,
- introducing the first end region into the third guide. For example, this is useful, in case the first retaining device is located with its centre in a region between 70° and 110°. Other regions between other degree values may also be useful.

According to some embodiments, the method comprises:
- providing a third guide, wherein the third guide is configured to hold the first tensioner,
- attaching the third guide to the bearing at a distance from the first guide and from the second guide,
- introducing the second end region into the third guide. For example, this is useful, in case the first retaining device is located with its centre in a region between 250° and 290°. Other regions between other degree values may also be useful.

According to some embodiments, the method comprises:
- providing a fourth guide, wherein the fourth guide is configured to hold the first tensioner,
- attaching the fourth guide to the bearing at a distance from the first, the second, and the third guides,
- introducing the first end region into the fourth guide. For example, this is useful, in case the first retaining device is located with its centre in a region between 70° and 110°. Other regions between other degree values may also be useful.

According to some embodiments, the method comprises:
- providing a fourth guide, wherein the fourth guide is configured to hold the first tensioner,
- attaching the fourth guide to the bearing at a distance from the first, the second, and the third guides,
- introducing the second end region into the fourth guide. For example, this is useful, in case the first retaining device is located with its centre in a region between 250° and 290°. Other regions between other degree values may also be useful.

According to some embodiments, the method comprises:
- providing a second elongated, flexible tensioner, wherein the second tensioner comprises a third end and a fourth end, a third end region adjoining the third end and a fourth end region adjoining the fourth end,
- providing a second retaining device, wherein the second retaining device is configured to keep the second tensioner under tension,
- providing a second, a third, and a fourth guides, wherein each of the guides is configured to hold the first and the second tensioners,
- attaching each guide of the four guides to the bearing at a distance from the other guides,
- introducing the first end region into the first guide,
- introducing the first end region into the second guide,
- introducing the first end region into the third guide,
- introducing the first end region into the fourth guide,
- introducing the third end region into the first guide,
- introducing the third end region into the second guide,
- introducing the fourth end region into the fourth guide,
- introducing the fourth end region into the third guide,
- arranging the second retaining device at a distance from the first retaining device along the circumference of the bearing,
- introducing the third end region into the second retaining device,
- introducing the fourth end region into the second retaining device,
- tensioning the second tensioner by pulling on the third end and/or fourth end,
- fixing each of the third end region and the fourth end region to the second retaining device under tension. Thus, two tensioners can be safely and reliably mounted with the aid of the four guides.

According to some embodiments, the method comprises:
- providing a third tensioner and a fourth tensioner,
- providing a third retaining device and a fourth retaining device,
- arranging the third tensioner and the third retaining device correspondingly to the first tensioner and the first retaining device, such that the first retaining device and the third retaining device are arranged next to each other,

- arranging the fourth tensioner and the fourth retaining device correspondingly to the second tensioner and the second retaining device, such that the second retaining device and the fourth retaining device are arranged next to each other. Thus, four tensioners can be safely and reliably mounted with the aid of the four guides.

In some embodiments, the method comprises locating two retaining devices of the retaining devices in an opposite position along the circumference of the bearing in regard to the two other retaining devices of the retaining devices.

In some embodiments, the method comprises locating a first group with two of the guides in an opposite position along the circumference of the bearing in regard to a second group with the two other guides, such that the retaining devices are each arranged between the first group and the second group.

According to some embodiments, the method comprises:
- providing a first bracket and a second bracket,
- introducing the first end region into the first bracket,
- introducing the second end region into the second bracket,
- arranging the first bracket at the first retaining device,
- arranging the second bracket at the first retaining device, wherein the first bracket and/or the second bracket is configured such that the first tensioner gets fixed at the first retaining device by the first and the second brackets after stopping the pulling on the first end and/or second end. This enables an easy and reliable fixation of the tensioner with respect to the retaining device.

According to some embodiments, the method comprises:
- providing a first cap and a second cap,
- attaching the first cap to the first retaining device such that it covers the first end, and
- attaching the second cap to the first retaining device such that it covers the second end. Thus, the ends of the tensioner are reliably protected, for example from environmental influences.

According to some embodiments, the first guide is attached to the bearing with a bolt that is used for attaching the bearing to a rotor hub of the wind turbine. This enables simple and cost-effective installation.

According to an embodiment, the guide comprises a fixing part and a holding part, the fixing part being configured to be attached to the bearing, the holding part being configured to hold a tensioner and to guide the tensioner along an outer surface of a first bearing ring of the bearing. This provides a simple and reliable guide that can reliably hold the tensioner and is easy to mount.

According to an embodiment, the tensioning system comprises an elongated, flexible tensioner, a retaining device, wherein the retaining device is configured to keep the tensioner under tension, and a guide according any of the embodiments described herein.

The tensioning system is mountable with a method according any of the embodiments described herein.

According to some embodiments, the retaining device comprises a main body and a bracket, wherein the main body comprises a through hole configured to allow the passage of the tensioner, and the bracket is configured to be located in the through hole and is configured to fix the tensioner to the main body in at least a first direction.

According to some embodiments, the tensioning system comprises:
- a second, a third and a fourth elongated, flexible tensioners,
- a second, a third and a fourth retaining devices, wherein each of the retaining devices is configured to keep a tensioner under tension,
- a second, a third and a fourth guide according to claim 15,
- wherein two retaining devices of the retaining devices are located in an opposite position along the circumference of the bearing in regard to the two other retaining devices of the retaining devices,
- wherein a first group with two of the guides is located in an opposite position along the circumference of the bearing in regard to a second group with the two other guides, such that the retaining devices are each arranged between the first group and the second group.

According to some embodiments, two retaining devices are located with their centre in a region between 70° and 110° and the two other retaining devices are located with their centre in a region between 250° and 290°, wherein a rotor shaft is mountable at 0°, and wherein the fourth guide is located in a region between 40° and 80°, the first guide is located in a region between 100° and 140°, the second guide is located in a region between 220° and 260° and the third guide is located in a region between 280° and 320°. This enables simple and safe installation and reliable reinforcement of the bearing.

According to an embodiment, the wind turbine comprises a bearing. For example, the bearing connects a rotor blade and a rotor hub. According to embodiments, the bearing is a pitch bearing. The wind turbine comprises a tensioning system according to any of the embodiments described herein. The tensioning system is coupled to the bearing, in particular to exert a radial compression force to the bearing.

Advantages, features and further developments of the method, the guide, the tensioning system and/or the wind turbine also apply to the other embodiments.

Embodiments of the present invention will be further described with reference to the accompanying drawings. In the drawings, elements of the same structure and/or functionality may be referred to by the same reference signs. Embodiments shown in the figures are illustrative representations and are not necessarily drawn to scale.
Figure 1 is a schematic view of a wind turbine according to an embodiment.
Figure 2 is a schematic view of a tensioning system according to an embodiment.
Figure 3 is a schematic view of a rotor hub with tensioning systems according to an embodiment.
Figures 4 to 11 are schematic views of details of tensioning systems according to embodiments.
Figures 12 to 15 are schematic views of a rotor hub with a tensioning system or parts thereof according to embodiments.
Figures 16 and 17 are schematic views of a bearing with a tensioning system according to embodiments.
Figure 18 is a flowchart of a method according to an embodiment.

While the invention is amenable to various modifications and alternative forms, specifics thereof have been shown by way of examples in the drawings and will be described in detail. It should be understood, however, that the intention is not to limit the invention to the particular embodiments described. On the contrary, the intention is to cover all modifications, equivalents and alternatives falling within the scope of the invention as defined by the appended claims.

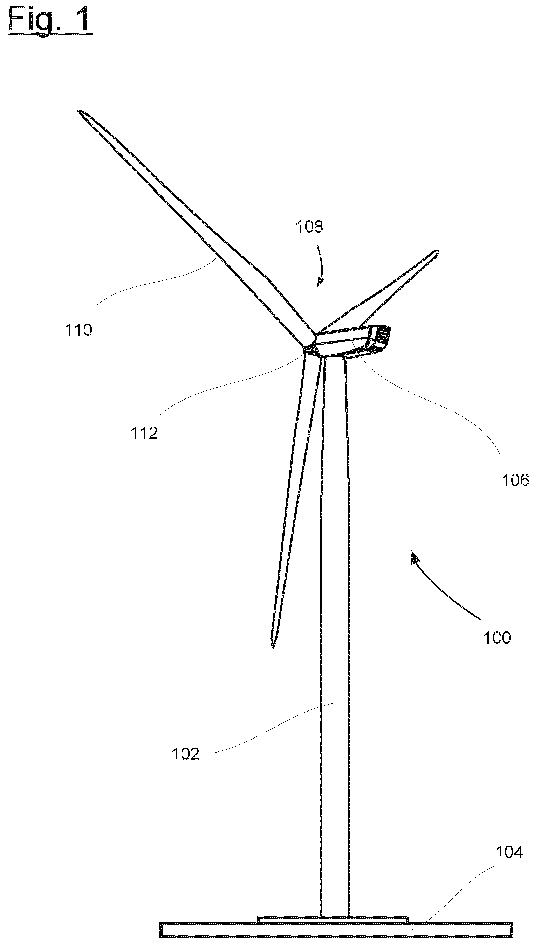

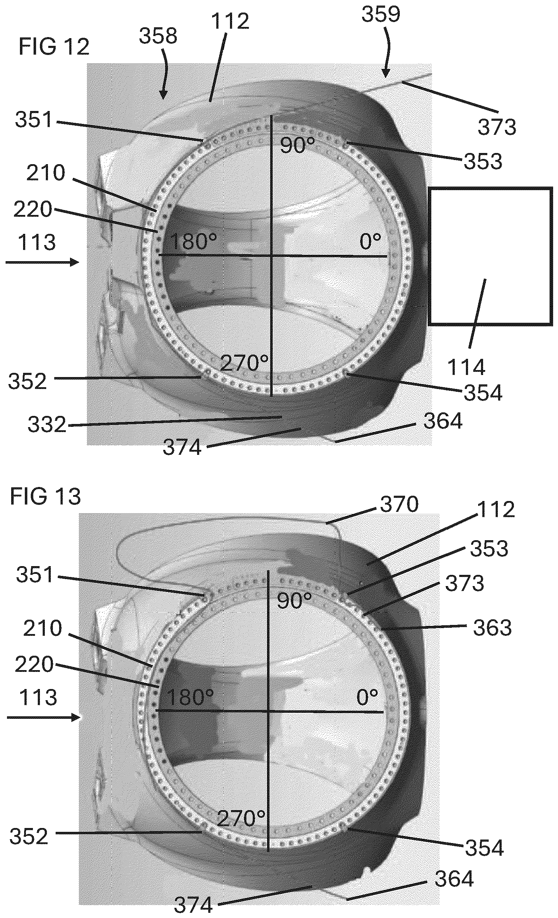

As shown in Figure 1, a wind turbine 100 comprises a tower 102. The tower 102 is connected to a foundation 104 fixed to the ground. Specifically, the foundation 104 may be formed at a predetermined depth inside the ground, which is reinforced by a composite structure, for example a concrete support. A nacelle 106 is arranged on a top of the tower 102 opposite the foundation 104. The nacelle 106 houses the drive train among other components and subassemblies. Inside the nacelle 106, for example, a generator is arranged that is connected to a rotor 108 via the drive train. The drive train may comprise, for example, a gearbox and a rotor shaft 114 (Figure 12). The rotor 108 comprises rotor blades 110. The rotor blades are rotatably mounted on a rotor hub 112. The rotor hub 112 is connected to the rotor shaft 114.

For example, the rotor 108 is driven by an airflow interaction of moving wind with the rotor blades 110 of the rotor 108. During operation, for example, the wind mainly comes in along a main wind inflow direction 113 (for example Figures 12 to 15). For example, a distal end of the rotor hub faces the main wind inflow direction, which can also be called "upwind side". The distal end is positioned opposite the end on which the rotor shaft 114 is mounted.

The rotational movement of the rotor 108 is transmitted via the drive train to the generator. The generator converts the mechanical output of the rotor 108 into electrical energy. By rotating the rotor blades 110 relative to the hub 112, the load on the rotor may be controllable. The rotor blades 110 are configured to be pitched in and out of the wind in order to modulate the energy capture as wind decreases or increases. The rotor blades 110 are pitchable to adapt the output or to protect the wind turbine from damaging overloads.

To perform the pitch control, each rotor blade 110 is provided with a pitch bearing 200 as shown for example in Figures 12 to 15. The pitch bearing 200 is located generally between the rotor hub 112 and the respective rotor blade 110. A mechanism, for example a hydraulic cylinder or an electric motor, provides the necessary energy and force for pitching the respective rotor blade 110.

The pitch bearing 200 is an example of a bearing 200 that may be used in the wind turbine 100. The following disclosure may also be correspondingly used with other bearings, like a yaw bearing.

As for example shown in Figures 12 to 15, the bearing 200 comprises a first bearing ring 210 and a second bearing ring 220. The first bearing ring 210 is attached to a wind turbine component, like the rotor hub 112. The second bearing ring 220 is attached to a second wind turbine component, like the rotor blade 110. The bearing 200 may be a rolling element bearing, like a ball bearing. Bearing elements may be arranged between the first bearing ring 210 and the second bearing ring 220 to enable relative rotation between the first bearing ring 210 and the second bearing ring 220 around the axis 203.

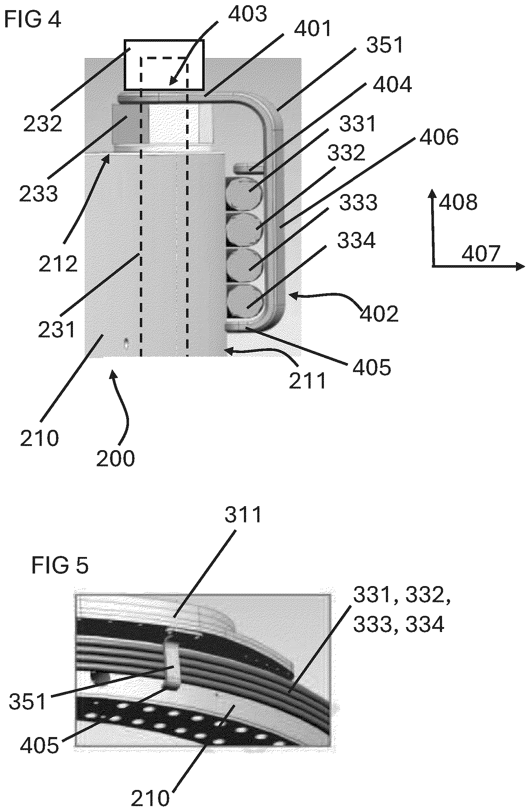

As for example shown in Figure 4, the first bearing ring 210 comprises an outer surface 211 facing radially outwards. In particular, the outer surface 211 faces away from the second ring 220.

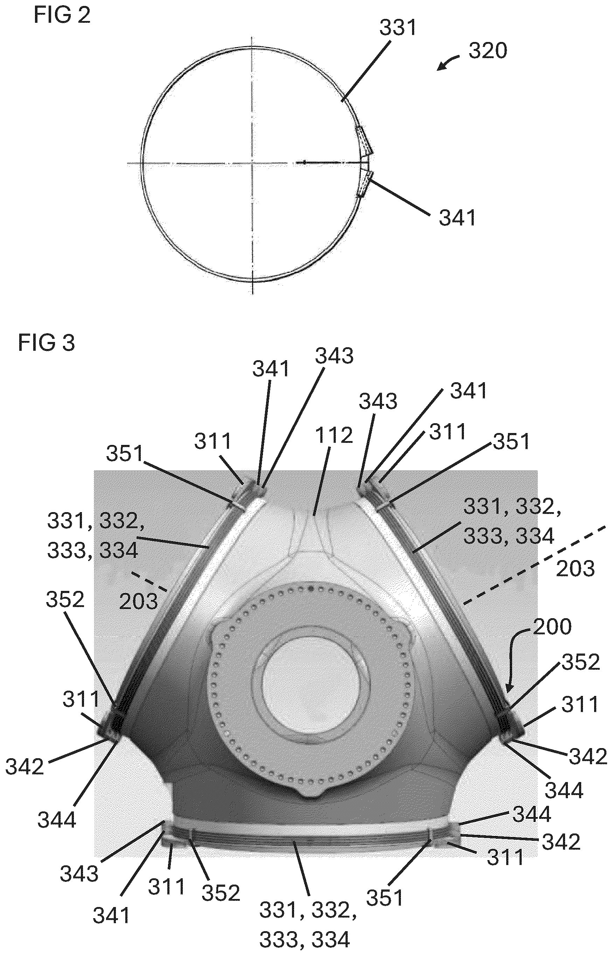

The first bearing ring 210, which for example is connected to the rotor hub 112, comprises a first surface 212 facing axially, for example parallel to an axis 203 (for example shown in Figure 3) through the centre of bearing ring 210. The first bearing ring 210 comprises a second surface which also faces axially. The first surface 212 and the second surface are arranged opposite each other. In particular, the first surface 212 may face the rotor blade 110 and the second surface may face the rotor hub 112. The second surface may be arranged nearer to the hub 112 than the first surface 212. The first surface 212 is arranged more proximate to the rotor blade 110 than the second surface. The outer surface 211 connects the first surface 212 and the second surface.

An embodiment of a tensioning system 320 consistent with this disclosure may be provided to reinforce the bearing 200.

The tensioning system 320 may be coupled to the bearing 200, in particular connected to the first bearing ring 210, in particular on the outer surface 211. The tensioning system 320 may provide compression forces and/or stiffness to the first bearing ring 210 to reinforce and stabilize the first bearing ring 210 at least locally and thus the bearing 200. The tensioning system 320 may enable the use of a more lightweight bearing 200 for the same wind forces and/or to reinforce an existing bearing 200 which, for example, is damaged. Thus, the tensioning system 320 may be retrofittable to existing bearings 200.

Figure 2 schematically shows an example of the tensioning system 320.

The tensioning system 320 comprises one tensioner 331 or more tensioners 331 - 334. In particular, the tensioning system 320 comprises exactly four tensioners 331, 332, 333, 334. The tensioners can each be at least one of a cable, a belt, a strand, a rope, and any other elongated, flexible element that can withstand the forces that occur.

The tensioning system 320 further comprises one retaining device 341 or a plurality of retaining devices 341, 342, 343, 344.

One tensioner 331, for example, is coupled with one retaining device 341. The tensioner 331 is fixed to the retaining device 341 under tension. The retaining device 341 is configured to hold the tensioner 331 under tension. The tensioning system 320, in particular the tensioner 331 and the retaining device 341, is arranged at the outer surface 211 of the first bearing ring 210. For example, the tensioning system 320 is arranged nearer to a first surface 212 than to an opposite second surface of the first bearing ring 210.

For example, the tensioning system 320 is configured to completely surround the first bearing ring 210 at the outer surface 211 by 360°.

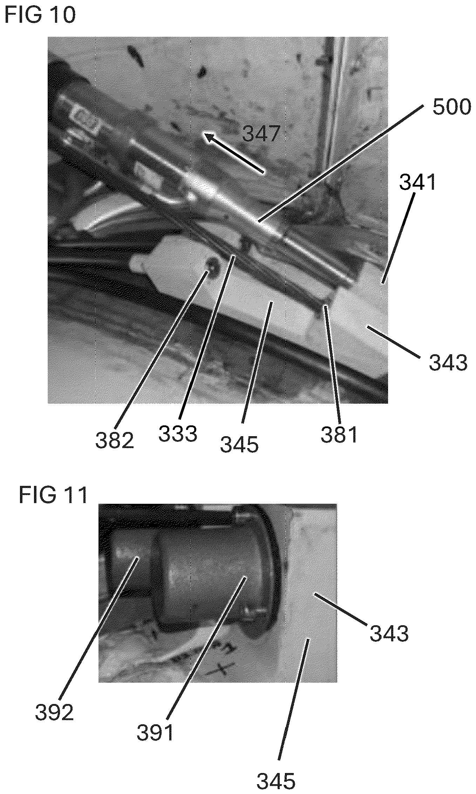

A tensioning force may be applied to the tensioner 331 such that compression forces act radially inwards on the first bearing ring 210. For example, the tensioning force is applied by a tensioning device 500 along a first direction 347 (for example shown in Figure 10). The tensioning device 500 comprises for example a hydraulic tensioning device and/or a mechanical tensioning device.

The tensioning force for each of the tensioners 331 to 334 may be, for example, greater than 50 kN, greater than 80 kN, greater than 90 kN, greater than 100 kN, less than 350 kN, in a range of between 75 kN and 250 kN, in a range of between 80 kN and 250 kN, in a range of between 90 kN and 250 kN, in a range of between 100 kN and 250 kN, in a range of between 125 kN and 200 kN, in a range of between 125 kN and 175 kN. For example, the tensioning force 322 may be 150 kN.

The retaining device 341 to 344 is configured to fix the tensioner 323, 324 such that the compression forces 321 are maintained. Since the tensioning system 320 may surround the first bearing ring 210, the compression forces act along the entire outer surface 211. The compression forces may differ along the outer surface 211, for example due to friction. It is possible to arrange the retaining devices such that a region or a plurality of regions in which the compression force is highest is/are at desired region/s of the outer surface 211, for example in an upwind area.

For example, the level of the compression forces of the first bearing ring 210 may be specified by the maximum tensioning force that can be applied to the tensioners 331 to 334. But also, the effect of that level of the compression forces in the bearing ring stresses and the bearing raceways may need to be considered. For example, the level of the tensioning force is set dependent on the type of the bearing 200.

Figure 3 shows the rotor hub 112 with three tensioning systems 320. The rotor hub 112 is configured to be coupled to three rotor blades 110. Three bearings 200 are mounted to the rotor hub 112, one bearing 200 for each rotor blade 110. One tensioning system 320 is provided for each bearing 200. For example, the tensioning systems 320 are each provided so that they correspond to each other in the same way. One tensioning system 320 is therefore described below, whereby the disclosure also applies to the other tensioning systems 320.

The tensioning system 320 comprises four tensioner 331 to 334. The tensioning system 320 comprises four retaining devices 341 to 344. Two retaining devices 341, 343; 342, 344 are arranged directly next to each other. Two retaining devices 341, 343 are arranged opposite the other two retaining devices 342, 344.

According to some embodiments, reinforcement plates 311 may be attached to the first bearing ring 210 to reinforce the first bearing ring 210. According to other embodiments, the reinforcement plates may be omitted.

The reinforcement plates 311 may increase the stiffness of the first bearing ring 210 locally. For example, the reinforcement plates 311 are fixed to the first bearing ring 210 via bolt connection. The reinforcement plates 311 for example are stacked to form a plate stack.

The reinforcement plates 311 may be made of a metal, for example steel or iron. The reinforcement plates 311 may be mounted in places of the first bearing ring 210 where reinforcement is required locally, for example where the bearing ring is damaged, for example by a crack. Alternatively, or in addition, the reinforcement plates 311 may be mounted in places of the first bearing ring 210 where reinforcement is required locally, for example on a side which is positioned upwind. Alternatively, or in addition, the reinforcement plates 311 may be mounted in places of the first bearing ring 210 where reinforcement is required locally, for example in an area of a recess for introducing the bearing elements.

For example, two plate stacks of reinforcement plates 311 are provided at the bearing 200 as shown in Figure 3. The two retaining devices 341, 343 are arranged directly next to one of the plate stack and the other two retaining devices 342, 344 are arranged directly next to the other plate stack.

The tensioning system 320 further comprises guides 351, 352. According to embodiments, the tensioning system 320 comprises one guide 351 or a plurality of guides 351 to 357. The guides 351 to 357 are each configured to hold the tensioners 331 to 334 to the outer surface 211 of the first bearing ring 210. The guides 351 to 357 are each configured to hold one single tensioner 331 or a plurality of tensioners 331 to 334, for example four tensioners 331 to 334.

The guides 351 to 357 are attached to the first bearing ring 210. The guides 351 to 357 extend over a part of the outer surface 211. The tensioners 331 to 334 are arranged between the outer surface 211 and the guides 351 to 357 along a radial direction. The tensioners 331 to 334 are configured to prevent shifting and/or slipping of the tensioners 331 to 334 along the outer surface 211.

Figure 4 schematically shows the guide 351 according to an embodiment. The other guides 352 to 357 may be provided with the same design or may be designed differently.

The guide 351 comprises a fixing part 401 which extends at least partly along the first surface 212 of the first bearing ring 210. The fixing part 401 is followed by a holding part 402. The fixing part 401 and the holding part 402 are aligned approximately perpendicular to each other. The holding part 402 extends at least partly along the outer surface 211.

The fixing part 401 is configured fix the guide 351 to the bearing 200. The fixing part 401 comprises an opening 403. A bolt 231 extend through the opening 403. For example, the bolt 231 is a bolt to attach the first bearing ring 210 to the rotor hub 112. A nut 233 is screwed onto the bolt 231 to fasten the first bearing ring 210 and the rotor hub 112 together. The fixing part 401 is placed on the bolt 231, over the existing nut 233, and the additional nut 232 is tightened over the fixing part 401.

The fixing part 401 of the guide 351 is mounted on the bolt 231 such that the nut 233 is between the fixing part 401 and the first surface 212 of the first bearing ring 210. A further nut 232 is screwed onto the bolt 231 to fix the guide 351 to the bolt 231 and thus to the first bearing ring 210. The fixing part 401 is mounted on the bolt 231 such that the fixing part 401 is between the nut 233 and the further nut 232.

The holding part 402 is configured to hold the tensioners in place during assembly and operation. For example, the holding part 402 prevents the tensioner 334 to 334 from detaching from the first bearing ring 210 during assembly before they are fastened in the retaining devices 341 to 344.

The holding part 402 may comprise a first projecting part 404 and a second projecting part 405. The first projecting part 404 and the second projecting part 405 project each from a lateral holding part 406 along a radial direction 407. The first projecting part 404 and the second projecting part 405 project each from the lateral holding part 406 towards the outer surface 211. The second projecting part 405, for example, is in contact with the outer surface 211 to support itself.

The lateral holding part 406 extends along the outer surface 211 such that the tensioners 331 to 374 are arranged between the outer surface 211 and the lateral holding part 406. The lateral holding part 406 hold the tensioners 331 to 334 toward the outer surface 211 along the radial direction 407, in particular during assembly of the tensioning system 320.

The tensioners 331 to 334 are arranged between the first projecting part 404 and the second projecting part 405 along an axial direction 408. The axial direction extends along the perpendicular to the radial direction 407.

The tensioners 331 to 344 are hold in position relative to the first bearing ring 210 by the outer surface 211 and the lateral holding part 406 as well as by the first projecting part 404 and the second projecting part 405.

The tensioners 331 to 334 are arranged next to each other along the axial direction 408. According to some embodiments, the maximum height of the tensioners 331 to 334 together is greater than 5% of the bearing height along the axial direction 108, greater than 10%, greater than 20%, greater than 30%, greater than 40%, greater than 50%, greater than 60%, greater than 70%, greater than 80%, greater than 90%, 100%, between 10% and 100%, between 10% and 50% of the bearing height.

Figure 5 schematically shows the guide 351 according to a further embodiment. The functionality of the guide 351 according to Figure 5 is the same as the functionality of the guide 351 according to Figure 4. In contrast, the guide 351 according to Figure 5 is not fixed to the first bearing by the bolt 321 and the nut 323. The guide 351 according to Figure 5 is directly attached to the reinforcement plate 311. The guide 351 may be integrated into the reinforcement plate 311. The guide 351 may be rigidly connected to the reinforcement plate 311 by bolts. The guide 351 is mounted and fixed on the reinforcement plate 311 which is in direct contact with the first surface 212 of the first bearing ring 210. The guide 351 is attached together with the reinforcement plate 311 to the first bearing ring 210. The guide 351 reaches over the tensioners 311 to 334 along the axial direction 408. For example, the reinforcement plate 311 is mounted on the first bearing ring 210 by bolts 231 that are used for mounting the first bearing ring 310 to the rotor hub 112. The guide 351 is attached to the reinforcement plate 311 such that the guide 351 is fixed relative to the first bearing ring 210.

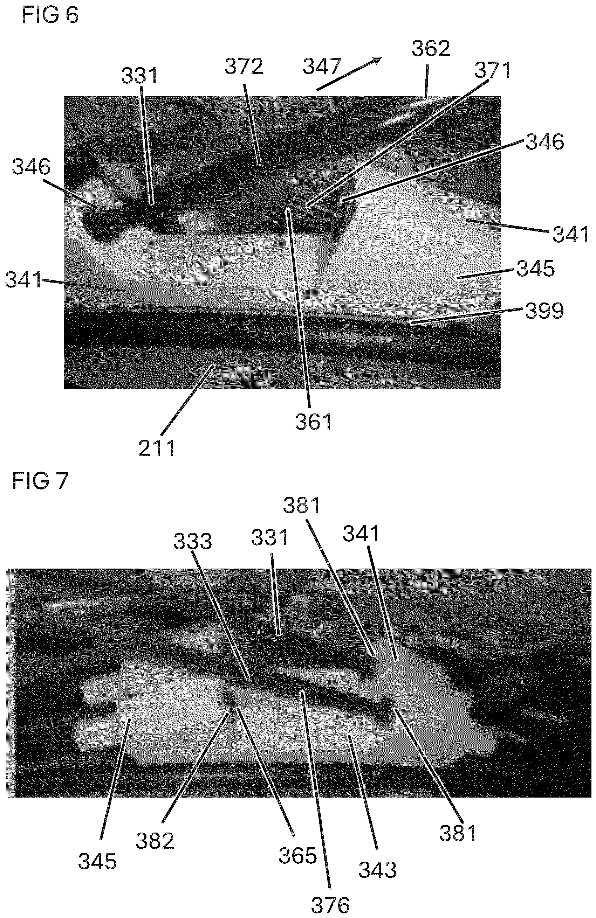

Figures 6 to 11 show the tensioning system in various states during mounting.

The tensioner 331 comprises a first end 361 and a second end 362. The tensioner 331 is elongated between the first end 361 and the second end 362. A first end region 371 adjoins the first end 361. A second end region 372 adjoins the second end 362. The tensioner 331 is wrapped around the outer surface 211 by pushing and/or pulling it around the bearing 200. The first end region 371 and the second end region 372 are each inserted into retaining device 341.

The retaining device comprises a main body 345. The main body 345 is made of metal. The main body 345 comprises two through holes 346, one for each end region 371, 372 of the tensioner 331. The first end region 371 is introduced into one of the through holes 346. The second end region 372 is introduced into the other one of the through holes 346. In the exemplary embodiment, the second end region 372 faces the nacelle 106 such that the first direction points towards the nacelle 106.

The tensioner 331 is cut in the first end region 371, if necessary, so that the protruding first end region 371 has a desired length that protrudes over the main body 345 or that the tensioner does not protrude (as exemplarily shown in Figure 7).

As for example shown in Figure 7, a first bracket 381 is put onto the first end region 371. A second bracket 382 is onto the second end region 372. The brackets 381, 382 are each arranged in the associated through hole 346. The brackets 381, 382 are each arranged between the main body 345 and the tensioner 331. The main body 345 surrounds the brackets 381, 382 and the brackets 381, 382 surround the tensioner 331.

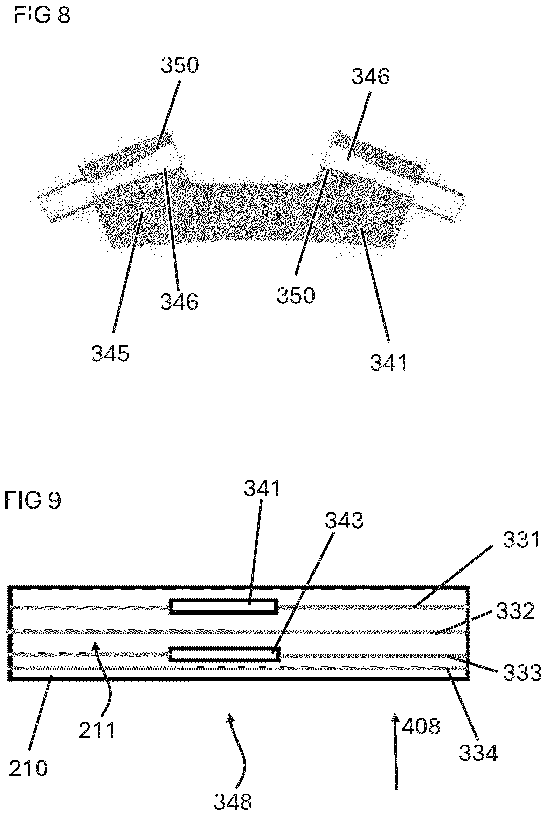

The brackets 381, 382 are each formed as a sleeve and are wedge-shaped and/or v-shaped. The through holes 346 comprise a corresponding inclined inner surface 350 (Figure 8). This allows the brackets 381, 382 to be inserted into the associated through hole 346 in the main body 345 up to a predetermined position in the main body 345.

The brackets 381, 382 are designed so that when the tensioner 331 pulls them into the main body 345, they exert an inward force on the tensioner 331. For example, the brackets 381, 382 compress the tensioner so that relative movement between the tensioner 331 and the bracket 381, 382 is blocked. This also blocks relative movement between the tensioner 331 and the main body 345. For example, the final fixing gets performed when the tensioner 331 tries to relax after it has been tensioned and the brackets 381, 382 inside the retaining device 341 clamp the tensioner 331.

Using the example of the end region 372 in Figure 6, it is possible to pull the tensioner 311 relative to the bracket 381 and the main body 345 along the first direction 347 to tension the tensioner 331. A reverse movement against the first direction 347 is blocked by the bracket 381.

Figure 10 shows the tensioning device 500 that tensions the tensioner 331 along the first direction 347. For example, the tensioning device 500 engages at the second end region 372.

After the tensioner 331 has been tensioned to the desired tension force, the tensioning device 500 is removed and the tensioner 331 is cut off in the second end region 372.

As shown in Figure 11, caps 391, 392 are put on to close each of the through holes 346, wherein one bracket 381, 381 and the end of the tensioner is covered by the respective cap 391, 392. The caps 391, 392 are each fixed to the main body 345.

For example, four guides 351 to 354 are arranged as shown in Figures 12 to 14 to hold the tensioners 331 to 334 during installation.

The first tensioner 331 is mounted starting at the 90° position. The first end 361 is firstly introduced into the first guide 351 and afterwards pushed around the first bearing ring 210 along the outer surface 211 such that the first end 361 passes through the second guide 352, the fourth guide 354 and the third guide 353 in turn. The end regions 371, 372 are then located between the first guide 351 and the third guide 353. The first retaining device 341 can be located with its center in a region between the first guide 351 and the third guide 353 at about 90°. The 0° reference point is where the center of the rotor shaft 114 is arranged.

The second tensioner 332 is mounted as shown in Figures 12 to 14. The second tensioner 332 extends elongated between a third end 363 and a fourth end 364. A third end region 373 adjoins the third end 363 and a fourth end region 374 adjoins the fourth end 364.

The fourth end 364 is firstly introduced into the first guide 351 and afterwards pushed around the first bearing ring 210 along the outer surface 211 such that the fourth end 364 passes through the second guide 352. The fourth end region 374 is then between the second guide 352 and the fourth guide 354 (Figure 12).

Afterwards, the third end 363 is introduced into the third guide 353 and afterwards pushed around the first bearing ring 210 along the outer surface 211 such that the third end 363 passes through the fourth guide 354. A loop 370 is formed for this purpose (Figure 13).

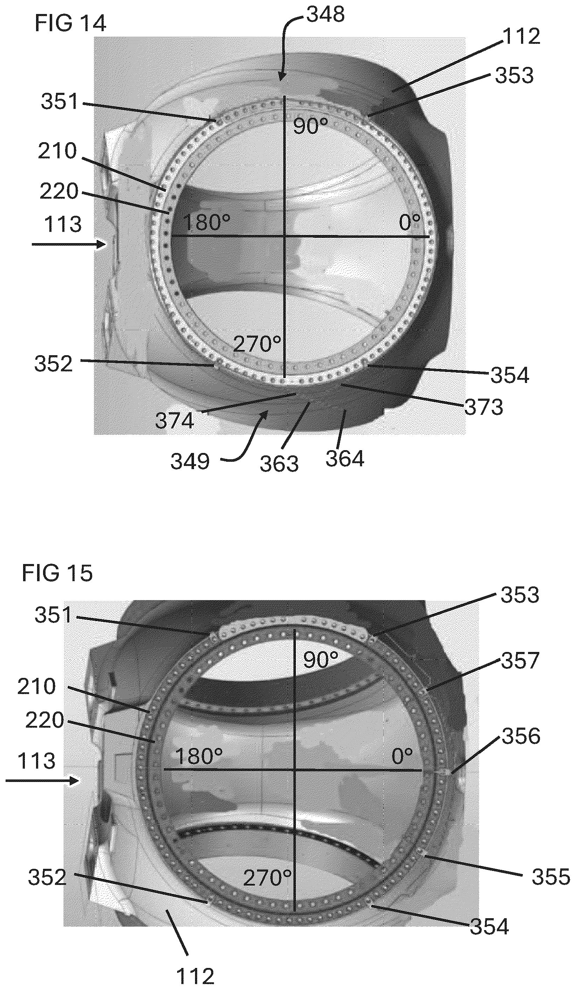

The third and the fourth end regions 373, 374 are then located between the second guide 352 and the fourth guide 354. The second retaining device 342 can be located with its center in a region between the second guide 352 and the fourth guide 354 at about 270° (Figure 14).

Afterwards, the third tensioner 333 is installed like the first tensioner 331.

Afterwards, the fourth tensioner 334 is installed like the second tensioner 332.

Tensioning of the tensioners 331 to 334 for example takes place after all four tensioners 331 to 334 have been installed.

The tensioners 331 to 334 are each tensioned with the tensioning device 500 at the end facing the nacelle 106. In other words, the tensioners 331 to 334 are each tensioned with the tensioning device 500 at the end facing the rotor shaft 114. In other words, the tensioners 331 to 334 are each tensioned with the tensioning device 500 at the end facing 0°. For example, the first tensioner 331 is tensioned at the second end 362 and the second tensioner 332 is tensioned at the fourth end 364.

The first guide 351 and the second guide 352 are arranged as a fist group in a position 358 between 90° and 270°, including 180°.

The third guide 353 and the fourth guide 354 are arranged as a second group in a position 359 between 270° and 90°, including 0°.

The first and the third retaining devices 341, 343 are arranged at a position 348 between the first group and the second group. The first and the third retaining devices 341, 343 are arranged at the position 348 between 0° and 180°, including 90°.

The second and the fourth retaining devices 342, 344 are arranged at a position 349 between the first group and the second group. The second and the fourth retaining devices 342, 344 are arranged at the position 349 between 180° and 0°, including 270°.

In the example, in which four guides 351 to 354 are arranged and the retaining devices 3341 to 344 are arranged at two opposite positions, the distance between the retaining device and the directly adjacent guide is in a range of between 5 and 8 bolts. For example, the distance is in a range of between 20° and 50°.

In another example, in which only one single guide is arranged and only one single retaining device is arranged, the maximum distance between the guide and the retaining device for example is 180°. For example, the maximum distance is 46 bolts.

As schematically shown in Figure 9 in the direction 408 along the surface 211 a part of the second tensioner 332 is located between the first retaining device 341 and third retaining device 343 at the position 348. Correspondingly, a part of the third tensioner 333 is located between the second retaining device 342 and the fourth retaining device 344 at the position 349 (not explicitly shown). The retaining devices 341 to 344 may have a recessed area 399 (Figure 6 next to the surface 211 of the bearing 200 to provide room for the tensioners 331 to 334.

Figure 15 shows, by way of example, that more than the four guides 351 to 354 can be arranged. For example, additional guides 355 to 357 can be arranged between the third guide 353 and the fourth guide 354 as part of the second group. Of course, any other number of additional guides can also be provided, and the additional guides can be provided at other locations. The additional guides 355 to 357 for example provide additional more safety to a worker that accesses the hub 112 from an area next to the second group.

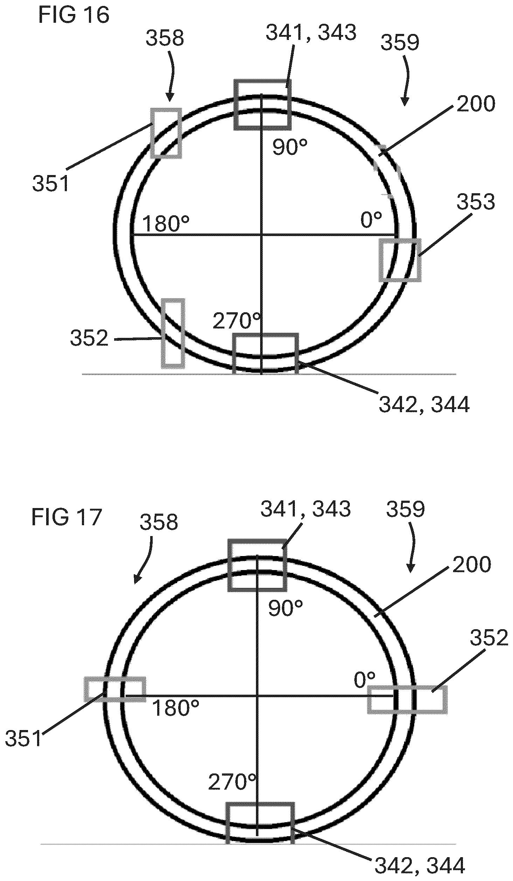

Figures 16 and 17 show, by way of example, that less than the four guide 351 to 354 can be arranged.

As shown in Figure 16, three guides 351, 352, 353 may be arranged. The first and the second guides 351, 352 are arranged at the position 358 and the third guide is arranged at position 359. A different distribution of the three guides 351, 352, 353 is of course also possible.

The first and the third retaining devices 341, 343 are arranged between the first guide 351 and the third guide 353.

The second and the fourth retaining devices 342, 344 are arranged between the second guide 352 and the third guide 353.

As shown in Figure 17, two guides 351, 352 are arranged. The first guide 351 is arranged at the position 358 and the second guide is arranged at position 359. For example, the first guide 351 is located with its center at 180°. For example, the second guide 352 is located with its center at 0°. A different distribution of the two guides 351, 352 is of course also possible.

The first and the third retaining devices 341, 343 are arranged between the second guide 352 and the first guide 351 in a region between 0° and 180°.

The second and the fourth retaining devices 342, 344 are arranged between the first guide 351 and the second guide 352 in a region between 180° and 0°.

For example, the distance between the retaining device and the directly adjacent guide is in a range of between 80° and 100°, or example 90°. For example, the distance is 23 bolts.

For example, regardless of the number of guides and retaining devices, the retaining device and the directly adjacent guide are arranged apart from each other in a range of between 180° and 0°, for example between 160° and 10°, for example between 120° and 15°, for example between 100° and 20°, for example between 90° and 20°, for example between 60° and 20°, for example between 50° and 20°, for example between 40° and 20°, for example between 30° and 20°, for example about 25°.

For example, regardless of the number of guides and retaining devices, the retaining device and the directly adjacent guide are arranged apart from each other in a range of between 46 bolts and 1 bolt, for example between 40 bolts and 2 bolts, for example between 30 bolts and 3 bolts, for example between 20 bolts and 4 bolts, for example between 15 bolts and 5 bolts, for example between 10 bolts and 6 bolts, for example about 7 bolts.

For example, regardless of the number of guides, two directly adjacent guides are at least 20° apart from each other, for example at least 30°, for example at least 40°, for example at least 50°, for example at least 60°, for example at least 70°, for example at least 80°, for example at least 90°. For example, regardless of the number of guides, two directly adjacent guides are spaced 180° or less from each other, for example 170° or less, for example 160° or less, for example 150° or less, for example 140° or less, for example 130° or less, for example 120° or less, for example 110° or less, 100° or less, for example 90° or less.

For example, regardless of the number of guides, two directly adjacent guides are at least 5 bolts, which fix the first bearing ring 210 to the rotor hub 112, apart from each other, for example at least 6 bolts, for example at least 7 bolts, for example at least 8 bolts, for example at least 9 bolts, for example at least 10 bolts, for example at least 15 bolts, for example at least 20 bolts, for example at least 25 bolts, for example at least 26 bolts, for example at least 30 bolts, for example at least 35 bolts, for example at least 40, for example at least 50 bolts, for example at least 60 bolts, for example at least 70 bolts, for example at least 80 bolts, for example at least 90 bolts. For example, regardless of the number of guides, two directly adjacent guides are spaced 95 bolts or less from each other, for example 94 bolts or less, for example 93 bolts or less, for example 92 bolts or less, for example 91 bolts or less, for example 90 bolts or less, for example 80 bolts or less, for example 70 bolts or less, for example 60 bolts or less, for example 50 bolts or less, for example 40 bolts or less, for example 30 bolts or less, for example 20 bolts or less, for example 10 bolts or less, for example 9 bolts or less, for example 8 bolts or less, for example 7 bolts or less, for example 6 bolts or less.

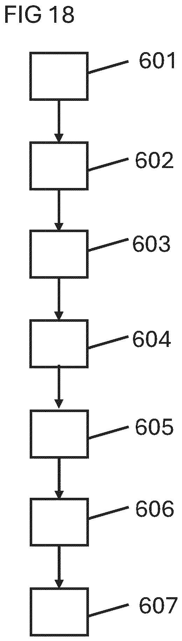

Figure 18 shows a flowchart of a method for mounting the tensioning system 320 to the bearing 200. In particular, the method is used for mounting the tensioning system 320 according to any of the examples describes herein.

In a step 601, a desired number of tensioners 331 to 334 is provided, for example four tensioners 331 to 334,

In a step 602, the corresponding number of retaining devices 341 to 344 is provided, for example four retaining devices 341 to 344 per bearing 200 of the rotor hub 112.

In a step 603, a desired number of guides 351 to 357 is provided, for example one guide 351 or a plurality of guides 351 to 357.

In a step 604, the guide or the guides 351 to 357 provided in step 604 are attached to the bearing 200, in particular to the first bearing ring 210.

In a step 605, a first one of the tensioners 331 to 334 provided in step 601 is wrapped around the bearing 200 and introduced into at least one of the guides 351 to 357 which have been attached to the bearing 200 in step 604.

In a step 606, the first one of the tensioners 331 to 334 is coupled to a first one of the retaining devices 341 to 344 provided in step 602 such that both end regions 371, 372 extend through the main body 345.

In a step 607, the first one of the tensioners 331 to 334 is tensioned to exert a radial compression force to the first bearing ring 210 and fixed to the training device 341 under tension.

Steps 604 to 606 are repeated until all tensioners 331 to 337 at all bearings 200 of the rotor hub 112 are tensioned and fixed. It is also possible that not all bearings 200 of the rotor hub 112 are equipped with a corresponding tensioning system 320, but only some of them. For example, one or two bearings 200 are equipped with a corresponding tensioning system 320 and one or two bearings 200 remain without a corresponding tensioning system 320.

It is possible that the rotor hub 112 is turned 120° after step 606 and in order to reach all bearings of the rotor hub 112. For example, the rotor hub 112 is turned 120° after the first tensioning system 320 is mounted on a first bearing 200 and the second tensioning system 320 is mounted on a second bearing 200 and before the third tensioning system 320 is mounted on a third bearing 200.

It is possible that the rotor hub 112 is turned 120° in between the steps 605 and 607. For example, the first and the third tensioners 331, 333 are tensioned while the second and the fourth tensioners 332, 334 are mounted but not yet tensioned. Then, the rotor hub 112 is turned 120° such that the second and the fourth retaining devices 342, 342 are accessible. In particular, the second and the fourth retaining devices 342, 342 are accessible to tension the second and the fourth tensioner 332, 334 in a position that corresponds to a position where the first and the third tensioners 331, 333 have been tensioned before.

### References

100 wind turbine
102 tower
104 foundation
106 nacelle
108 rotor
110 rotor blade
112 rotor hub
113 main wind inflow direction
114 rotor shaft
200 bearing
203 axis
210 first bearing ring
211 outer surface
212 first surface
220 second bearing ring
231 bolt
232, 233 nut
311 reinforcement plate
320 tensioning system
331 - 334 tensioner
341 - 344 retaining device
345 main body
346 through hole
347 first direction
348, 349 position of retaining device
350 inclined surface
351 - 357 guide
358, 359 position of group
361 - 364 end
370 loop
371, 372 end region
381, 382 bracket
391, 392 cap
399 recessed area
401 fixing part
402 holding part
403 opening
404 first projecting part
405 second projecting part
406 lateral holding part
407 radial direction
408 axial direction
500 tensioning device
601 - 607 method steps

## Claims

1. A method for mounting a tensioning system (320) to a bearing (200) for a wind turbine (100), the method comprising:
- providing a first elongated, flexible tensioner (331), wherein the first tensioner (331) comprises a first end (361) and a second end (362), a first end region (371) adjoining the first end (361) and a second end region (372) adjoining the second end (362),
- providing a first retaining device (341), wherein the first retaining device (341) is configured to keep the first tensioner (331) under tension,
- providing a first guide (351), wherein the first guide (351) is configured to hold the first tensioner (331),
- providing the bearing (200),
- attaching the first guide (351) to the bearing (200),
- introducing the first end region (371) into the first guide (351),
- wrapping the first tensioner (331) around the bearing (200),
- introducing the first end region (371) into the first retaining device (341),
- introducing the second end region (372) into the first retaining device (341),
- tensioning the first tensioner (331) by pulling on the first end (361) and/or second end (362),
- fixing each of the first end region (371) and the second end region (372) to the first retaining device (341) under tension.

2. The method according to claim 1, wherein the bearing (200) is a pitch bearing, the method comprising:
- locating the first retaining device (341) with its centre in a region between 70° and 110° of the bearing (200), wherein a rotor shaft (114) is arrangeable at 0°.

3. The method according to claims 1 or 2, comprising:
- tensioning the first tensioner (331) at the second end (362), wherein the second end (362) is arranged such that it points towards a nacelle (106) of the wind turbine (100).

4. The method according to any of the preceding claims, comprising:
- providing a second guide (352), wherein the second guide (352) is configured to hold the first tensioner (331),
- attaching the second guide (352) to the bearing (200) at a distance from the first guide (351),
- introducing the first end region (371) into the second guide (352).

5. The method according to any of claims 1 to 3, comprising:
- providing a second guide (352), wherein the second guide (352) is configured to hold the first tensioner (331),
- attaching the second guide (352) to the bearing (200) at a distance from the first guide (351),
- introducing the second end region (372) into the second guide (352).

6. The method according to claim 1, comprising:
- providing a second elongated, flexible tensioner (332), wherein the second tensioner (332) comprises a third end (363) and a fourth end (364), a third end region (373) adjoining the third end (363) and a fourth end region (374) adjoining the fourth end (634),
- providing a second retaining device (342), wherein the second retaining device (342) is configured to keep the second tensioner (332) under tension,
- providing a second, a third, and a fourth guides (352, 353, 354), wherein each of the guides (351, 352, 353, 354) is configured to hold the first and the second tensioners (331,332),
- attaching each guide (351, 352, 353, 354) of the four guides to the bearing (200) at a distance from the other guides,
- introducing the first end region (371) into the first guide (351),
- introducing the first end region (371) into the second guide (352),
- introducing the first end region (371) into the third guide (353),
- introducing the first end region (371) into the fourth guide (354),
- introducing the third end region (373) into the first guide (351),
- introducing the third end region (373) into the second guide (352),
- introducing the fourth end region (374) into the fourth guide (354),
- introducing the fourth end region (374) into the third guide (353),
- arranging the second retaining device (342) at a distance from the first retaining device (341) along the circumference of the bearing (200),
- introducing the third end region (371) into the second retaining device (342),
- introducing the fourth end region (372) into the second retaining device (342),
- tensioning the second tensioner (332) by pulling on the third end (363) and/or fourth end (364),
- fixing each of the third end region (373) and the fourth end region (374) to the second retaining device (342) under tension.

7. The method according to claim 6, comprising:
- providing a third tensioner (333) and a fourth tensioner (334),
- providing a third retaining device (343) and a fourth retaining device (344),
- arranging the third tensioner (333) and the third retaining (343) device correspondingly to the first tensioner (331) and the first retaining device (341), such that the first retaining device (341) and the third retaining device (343) are arranged next to each other,
- arranging the fourth tensioner (334) and the fourth retaining device (344) correspondingly to the second tensioner (332) and the second retaining device (342), such that the second retaining device (342) and the fourth retaining device (344) are arranged next to each other.

8. The method according to any of the preceding claims, comprising:
- providing a first bracket (381) and a second bracket (382),
- introducing the first end region (371) into the first bracket (381),
- introducing the second end region (373) into the second bracket (382),
- arranging the first bracket (381) at the first retaining device (341),
- arranging the second bracket (382) at the first retaining device (342), wherein the first bracket (381) and/or the second bracket (382) is configured such that the first tensioner (331) gets fixed at the first retaining device (341) by the first and the second brackets (381, 382) after stopping the pulling on the first end (361) and/or second end (362).

9. The method according to any of the preceding claims, comprising:
- providing a first cap (391) and a second cap (392),
- attaching the first cap (391) to the first retaining device (341) such that it covers the first end (361), and
- attaching the second cap (392) to the first retaining device (342) such that it covers the second end (362).

10. A guide (351) for a tensioning system for a bearing (200) of a wind turbine (100), the guide comprising:
- a fixing part (401) and a holding part (402), the fixing part (401) being configured to be attached to the bearing (200), the holding part (402) being configured to hold a tensioner (331) and to guide the tensioner (331) along an outer surface (211) of a first bearing ring (210) of the bearing (200).

11. A tensioning system (320) for a bearing (200) of a wind turbine (100), the tensioning system (320) comprising:
- an elongated, flexible tensioner (331),
- a retaining device (341), wherein the retaining device (341) is configured to keep the tensioner (331) under tension, and
- a guide (351) according to claim 10.

12. The tensioning system according to claim 11, wherein the retaining device (341) comprises a main body (354) and further comprising a bracket (381), wherein the main body (354) comprises a through hole (346) configured to allow the passage of the tensioner (331), and the bracket (351) is configured to be located in the through hole (346) and is configured to fix the tensioner (331) to the main body (345) in at least a first direction (347).

13. The tensioning system according to claim 11 or 12 comprising:
- a second, a third and a fourth elongated, flexible tensioners (332, 333, 334),
- a second, a third and a fourth retaining devices (342, 343, 344), wherein each of the retaining devices (341, 342, 343, 344) is configured to keep a tensioner (331, 332, 333, 334) under tension,
- a second, a third and a fourth guide (352, 353, 354) according to claim 15,
- wherein two retaining devices (341, 343) of the retaining devices are located in an opposite position (348) along the circumference of the bearing (200) in regard to the two other retaining devices (342, 344) of the retaining devices,
- wherein a first group with two of the guides (351, 352) is located in an opposite position along the circumference of the bearing (200) in regard to a second group with the two other guides (353, 354), such that the retaining devices (341, 343; 342, 344) are each arranged between the first group and the second group.

14. The tensioning system according any of claims 11 to 13, wherein two retaining devices (341, 343) are located with their centre in a region between 70° and 110° and the two other retaining devices (342, 344) are located with their centre in a region between 250° and 290°, wherein a rotor shaft (114) is mountable at 0°, and wherein the fourth guide (354) is located in a region between 40° and 80°, the first guide (351) is located in a region between 100° and 140°, the second guide (352) is located in a region between 220° and260° and the third guide (353) is located in a region between 280° and 320°

15. A wind turbine, comprising
- a bearing (200),
- a tensioning system (320) according to any of claims 11 to 14, wherein the tensioning system (320) is coupled to the bearing (200).
